# EUROPEAN PATENT SPECIFICATION

(11) **EP 0 837 890 B1**
(45) Date of publication and mention of the grant of the patent: **04.09.2002**
(21) Application number: 96923434.3
(22) Date of filing: 25.06.1996
(51) Int. Cl.: C08G 18/08, C08G 18/46, C08G 18/71, C08G 18/10, C08G 18/28, C08G 18/83, C09D 175/06

(54) **SILYL TERMINATED SULFOPOLY(ESTER-URETHANE) COMPOSITIONS**
MIT SILYL BEENDETE SULFOPOLY(ESTERURETHAN)-ZUSAMMENSETZUNGEN
COMPOSITIONS DE SULFOPOLYESTER-URETHANE A TERMINAISON SILYLE

(30) Priority: 07.07.1995 US 954 P; 01.03.1996 US 609193
(43) Date of publication of application: 29.04.1998
(73) Proprietor: MINNESOTA MINING AND MANUFACTURING COMPANY, St. Paul, Minnesota 55133-3427 (US)
(72) Inventor: LARSON, Wayne, K., Saint Paul, MN 55133-3427 (US)
(74) Representative: VOSSIUS & PARTNER
(86) International application number: US9610881
(87) International publication number: WO97003101

(56) References cited:
- EP-A- 0 163 214
- WO-A-94/13723
- US-A- 3 941 733
- US-A- 4 150 946

## Description

This application claims priority to U.S. Provisional Patent Application No. 60/000,954, filed July 7, 1995.

The present invention relates to water dispersible sulfopoly(ester-urethane)-compositions having at least one sulfo-organic segment. Compositions of the invention have utility as durable treatments such as low surface energy coatings that exhibit release towards adhesive materials, grease, and oils.

Surface treatments for polar surfaces which demonstrate durability or substantivity toward aqueous challenges are desirable but are often difficult to achieve. Such treatments are particularly desirable for hydroxy functional surfaces such as, for example, siliceous surfaces or cellulosic surfaces, where it is desirable to achieve the treatments without adversely impacting the visual properties of the surface.

Aqueous solvent dispersible linear sulfopolyurethane resins prepared from hydrophilic and hydrophobic diols have been disclosed in U.S. Patent No. 4,307,219. Hydrophilic sulfopolyurethanes and sulfopolyureas are disclosed in U.S. Patent Nos. 4,558,149, 4,746,717, and 4,855,384.
WO 94/13723 refers to room temperature curable silane-terminated polyurethane dispersions. These are in the form of aqueous dispersions of externally chain extended polyurethane compositions terminated by hydrolyzable and/or hydrolyzed silyl groups and contain anionic solubilizing or emulsifying groups, in particular carboxyl groups. The polyurethane dispersions can be dried and cured to water and solvent resistant, tough, scratch resistant and light stable polyurethane films which are particularly useful as coatings for wood substrates and marine surfaces and also as removable coatings on composition vinyl.
Aqueous dispersions of poly(urethane-urea) polymers which have a poly(urethane-urea) backbone containing interspersed bound water-solubilizing ionic groups pendant from the backbone and which have terminal mutually interactive silyl groups are disclosed in US-A-3,941,733.
Aqueous solutions or dispersions of a cationically modified polyurethane which dries to form a cross-linked coating are described in US-A-5,041,494. The polyurethane comprises 2 to 200 milliequivalents of incorporated ammonium groups per 100 g of solids content, 0 to about 25 wt% of ethylene oxide units contained within lateral or terminal polyether chains and at least 1.3 wt%, calculated as SiO₃, of incorporated structural units -Si(OR')(OR")(OR''') wherein R', R" and R"' may be the same or different and represent hydrogen or an alkyl group with 1 to 4 carbon atoms. The polyurethane is soluble or dispersible in water.
An aqueous dispersion of specific internally silylated and dispersed polyurethane resins is disclosed in EP-A 0 163 214. The polyurethane is said to be the polymerized reaction product of an organic polyisocyanate, an active hydrogencontaining material having at least two active hydrogens per molecule and an organosilane having at least one isocyanate reactive group on one organic moiety of the silane and which has at least one alkoxy, acyloxy or hydroxy group bound to the silicon atom.
WO 95/28429 refers to an aqueous dispersion of a polyurethane which contains siloxane bridges. The polyurethane resins have a number average molecular weight of 2,000 to 1,000,000, contain 2 to 150 mMol of siloxane bridges in each 100 g of solid resin, have a hydroxyl number of 0 to 100 and a content of ionic groups, which can be converted to ionic groups and/or hydrophilic groups of 5 to 200 milliequivalents for 100 grams of solid resin. The aqueous dispersion is said to be suitable for use in aqueous coatings, especially those used as a foundation varnish for multiple coat varnishes.

Briefly, the present invention provides a water-dispersible sulfopoly(ester-urethane) as defined in the claims which comprise, in their backbone, at least one arylene or alkylene sulfonic acid group or a salt thereof, the polymer being terminated by at least one hydrolyzable silyl group. Furthermore, the present invention provides compositions comprising these sulfopoly(ester-urethane)s. The compositions of the invention preferably have a sulfonate equivalent weight of about 500 to about 12,000 g/equivalent.

In a further aspect, the invention comprises aqueous dispersions comprising up to 60 percent by weight of the sulfopoly(ester-urethane) compositions and 40 or more weight percent solvents such as water or aprotic solvents (e.g., methylethyl ketone, acetone) and optional adjuvants in amounts suitable for their intended use.

In a still further aspect of the invention, a process for the preparation of the sulfopoly(ester-urethane) compositions of the invention is provided.

In yet another aspect of the invention, self-supporting films, fibers, and molded articles of the sulfopoly(ester-urethane) compositions are provided.

In this application:
"arylene or alkylene sulfonic acid group or salt thereof" means a group comprising at least one aromatic or aliphatic group substituted by at least one sulfonic acid group or a salt thereof;
"at least one hydrolyzable silyl group" means a silicon atom substituted with one or more alkoxy groups, at least one of which groups can be hydrolyzed to a silanol group;
"catenary" means in the main chain or backbone such as the oxygen in an ether but not the oxygen in a carbonyl group;
"fluorochemical segment" means an organic group comprising at least one segment containing a pendant fluoroaliphatic group having at least four fully fluorinated carbon atoms and at least one urethane/urea group, the group preferably comprising up to 20 carbon atoms;
"group" means the specified moiety or any group containing the specified moiety (as by substitution or extension) that does not adversely affect the composition;
"higher alkylene group" means an alkyl group having 5-30 carbons;
"higher alkylene segment" means an organic group comprising at least one segment containing C₁₂-C₃₀ alkyl pendent groups and at least one urethane/urea group;
"hydrophilic segment" means an aryl group comprising a pendant sulfonic acid group or salt thereof;
"hydrophobic group" means an organic group comprising at least one hydrolyzable silyl group;
"hydrophobic segment" means an organic group comprising at least one of a polysiloxane segment, a higher alkyl segment, and a fluorochemical segment;
"lower alkyl group" means an alkyl group having 1 to 4 carbon atoms;
"molecular weight" means the sum of the atomic weights of all atoms in a group of atoms or in a segment of a polymer and under circumstances where the group or segment may be a mixture of two or more groups or segments is the number average of molecular weights of the groups or segments;
"polymer" includes oligomers;
"random polymer" means like groups can be located at various points along the polymer backbone and not similarly sequenced;
"sulfopoly(ester-urethane)" means a symmetric or assymetric polymer or random polymer comprising at least one sulfo group, at least one ester group and at least one urethane group, optionally containing other functional groups such as urea and thiocarbamate;
"urethane/urea" means an oligomer or polymer comprising urethane or urea groups or a combination thereof.

The present invention provides water-dispersible poly(ester-urethane-urea) as defined in the claims comprising, in their backbone, one or more randomly disposed arylene or alkylene sulfonic acid groups or salts thereof, the polymer being terminated by at least one hydrolyzable silyl group as well as compositions comprising these compounds. Coatings of the poly(ester-urethane-urea) compositions of the present invention or articles formed from the compositions can have low surface energy surfaces that exhibit release characteristics toward adhesive materials, grease, and oils.

The sulfopoly(ester-urethane) of the invention have the structural formula: 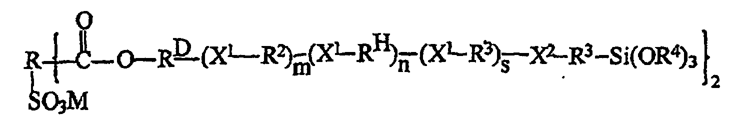 wherein 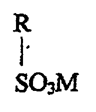 is a unit selected from the group consisting of 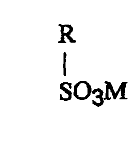 in which R is a C₆-C₁₂ aryltriyl group (trivalent aryl group) and M is a cation, or 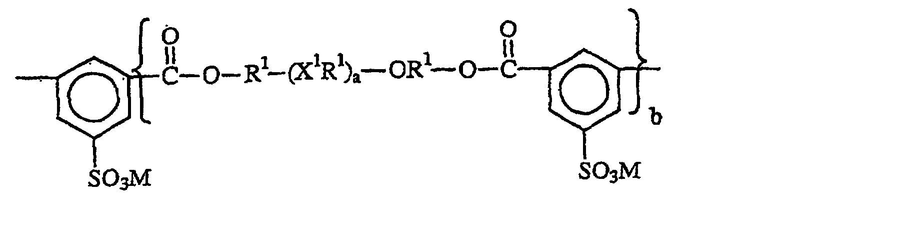 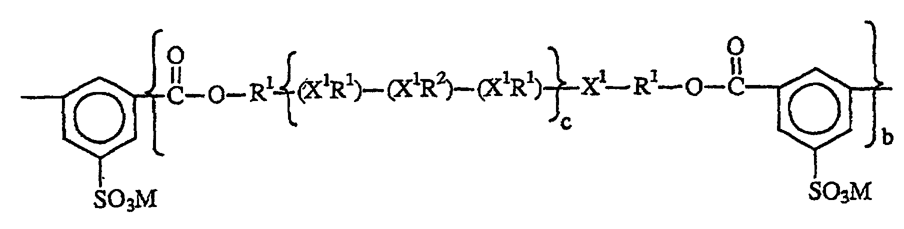
a is a number 1 to 10,
b is a number 0 to 4,
c is a number 1 to 15.

The skilled artisan will recognize that the values for a, b, and c can vary depending on the molecular weight of the R¹ and R² segments. The important factor in determining the value of these variables is the sulfonate equivalent weight of the final poly(ester-urethane) molecule, which should fall in the range of 500 to 12,000 g/eq. Generally speaking, the values of a and c will be larger when lower molecular weight R¹ (and R²) segments are utilized and they will be smaller when oligomeric R¹ segments are utilized.
- R^{D}: is 1) at least one of a divalent linear or branched organic group of 20 to 150 carbon atoms in units of 2 to 12 methylene groups and arylene groups of 6 to 10 carbon atoms separated by at least one of 1 to 50 catenary oxygen atoms and by 1 to 30 oxycarbonyl groups, 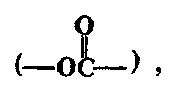 preferably at least one of I to 20 catenary oxygen atoms and by 1 to 10 oxycarbonyl groups, the organic group having a molecular weight of 400 to 2,500, preferably 600 to 1,000; or
- R^{D}: is 2) an organic group selected from the group consisting of a linear or branched alkylene group having 2 to 12 carbon atoms, a cyclopentamethylene group, a cyclohexamethylene group, a 5- or 6-membered azacyclic group, a phenylene group, a naphthalene group, a phenylenemethylenephenylene group, the organic group optionally being substituted by up to four lower alkyl groups having 1 to 4 carbon atoms and a total of up to 15 carbon atoms, which organic group can be chain extended by a transesterification reaction between a diol terminated ester precursor and a lower aliphatic diester of an aliphatic diacid having from 2 to 12 carbons or an aromatic diacid having from 8 to 12 carbons or reaction between a diol terminated ester precursor and an aliphatic lactone of 4 to 6 carbons; or
- R^{D}: has 3) the structure {-R¹-(X¹-R²-X¹-R¹)ₚ-} where p is an integer from 1 to 5, produced by the reaction of a polyol with an isocyanate having the structure OCN-R²-NCO to produce a segment having a molecular weight of from 500 to 4,000, preferably 800 to 2,000;
- R¹: is a linear or branched alkylene group having 2 to 12 carbon atoms, or an arylene group having 6 to 10 carbon atoms;
- X¹: is 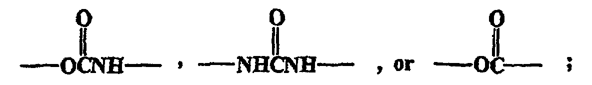
- R²: is an organic group selected from the group consisting of a linear or branched alkylene group having 2 to 12 carbon atoms, a cyclopentamethylene group, a cyclohexamethylene group, a 5- or 6-membered azacyclic group, a phenylene group, a naphthalene group, a phenylenemethylenephenylene group, the organic group optionally being substituted by up to four lower alkyl groups having 1 to 4 carbon atoms and a total of at most 15 carbon atoms;
s = 0 or 1,
n = 0 or 1,
m = 0 or 1, with the proviso that at least one of n or m is 1;
- X²: is 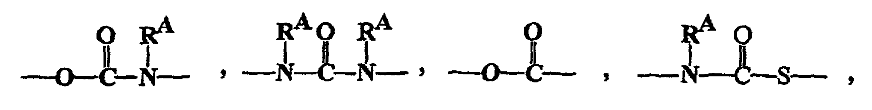 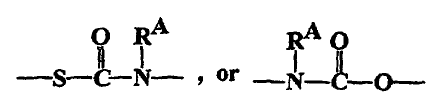 wherein R^{A} can be hydrogen or lower alkyl having 1 to 4 carbon atoms;
- R^{H}: is a divalent hydrophobic group selected from
divalent oligomeric siloxanes having the structure, 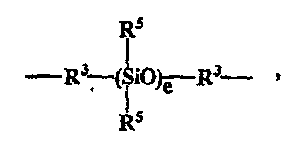 divalent organic groups having the structure 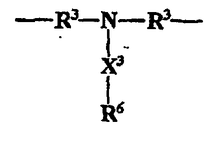 comprising a pendant alkyl group;
or divalent organic groups having one of the structures 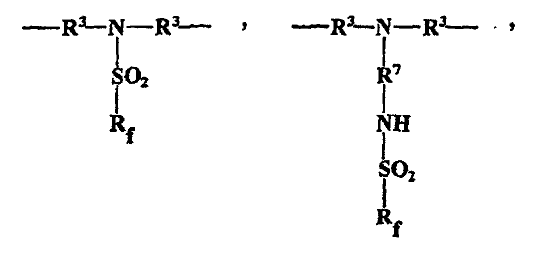 or quaternary salts thereof,
wherein R_{f} is a fluorocarbon pendant group, as defined below; and
- R³: is a divalent organic group selected from the group consisting of linear or branched alkylene groups having 2 to 12 carbon atoms, but it can also be an arylene, such as phenylene or an alkarylene group, each having 6 to 20 carbon atoms;
- R⁴: is a monovalent lower alkyl group having from 1 to 4 carbon atoms;
- R⁵: is a monovalent group selected from the group consisting of alkyl groups of one to twelve carbon atoms, aryl groups having 6 to 10 carbon atoms, or aralkyl groups having 6 to 10 carbon atoms, with at least 70% of R⁴ being methyl;
- e: is an integer of from 10 to 300;
- X³: is a covalent bond, a carbonyl group, 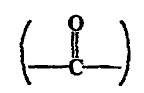 or an amide group 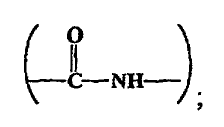
- R⁶: is a monovalent group selected from the group consisting of alkyl groups of 4 to 60 carbon atoms, preferably 12 to 30 carbon atoms;
- R⁷: is a divalent group selected from the group consisting of alkylene groups of 2 to 12 carbon atoms; and
- R_{f}: is a monovalent saturated fluoroaliphatic group having 6 to 12 carbon atoms, at least four of which are fully-fluorinated carbon atoms.

It is also understood that when the group R^{D} (or its component groups R¹ and R²) or the group R² contains branched alkylene components that these components constitute additional termini of the polymer or oligomer and as such, may themselves be terminated by at least one hydrolyzable silyl group.

The sulfopoly(ester-urethane) of the present invention has a sulfonate equivalent weight of about 500 to 12,000 g per equivalent, preferably 2,000 to 10,000 g per equivalent. The sulfopoly(ester-urethane) also preferably has a number average molecular weight of 2,000 up to less than 50,000, preferably in the range of 2,000 to 20,000, more preferably 5,000 to 8,000.

Representative processes for the preparation of the sulfopoly(ester-urethane) are schematically depicted in the Reaction Sequences, below.

Symmetric sulfodiacids or diesters are illustrated in the sequences for convenience. However, the skilled artisan will recognize that use of asymmetric sulfodiacids or diesters falls within the scope of the present invention. 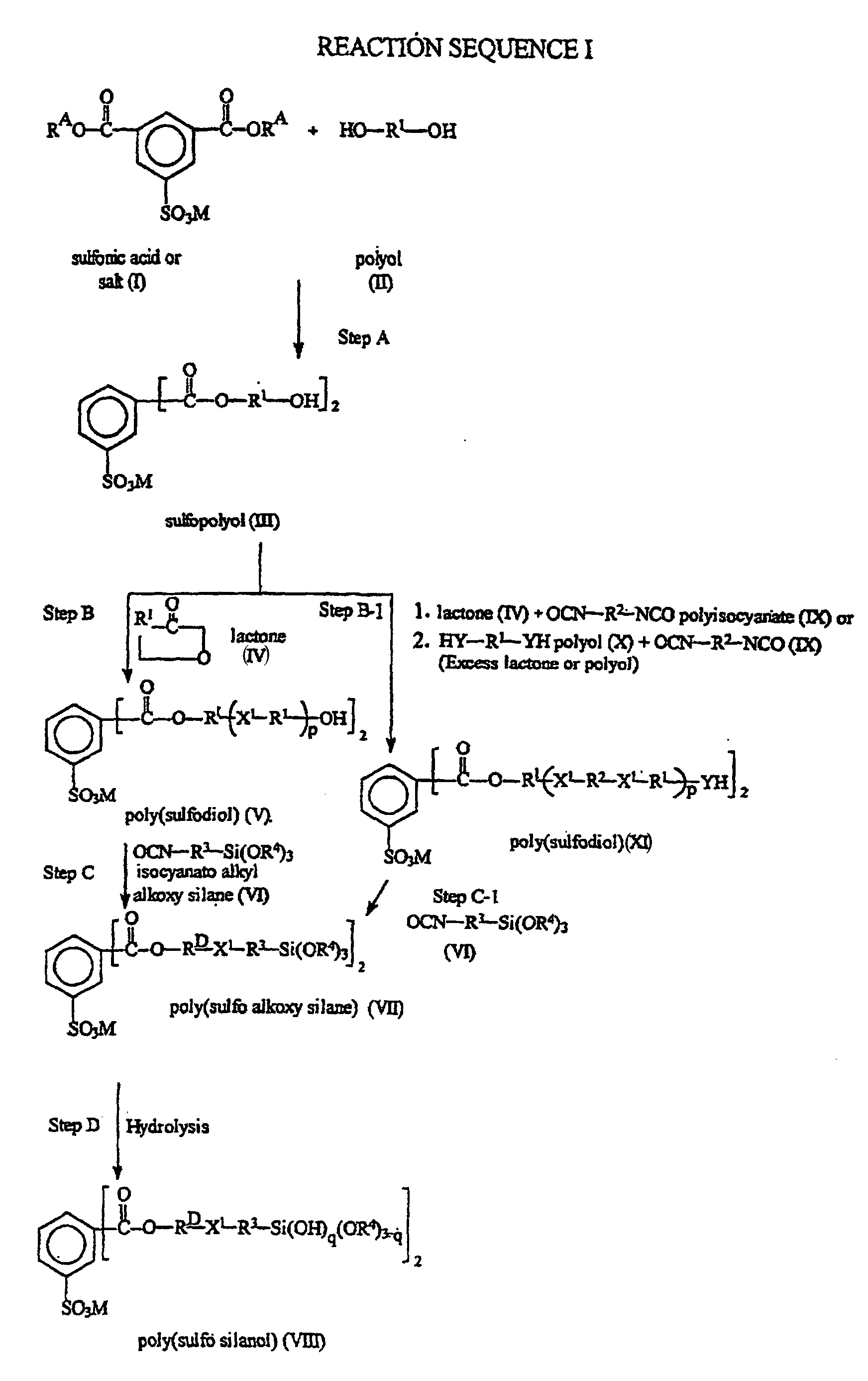 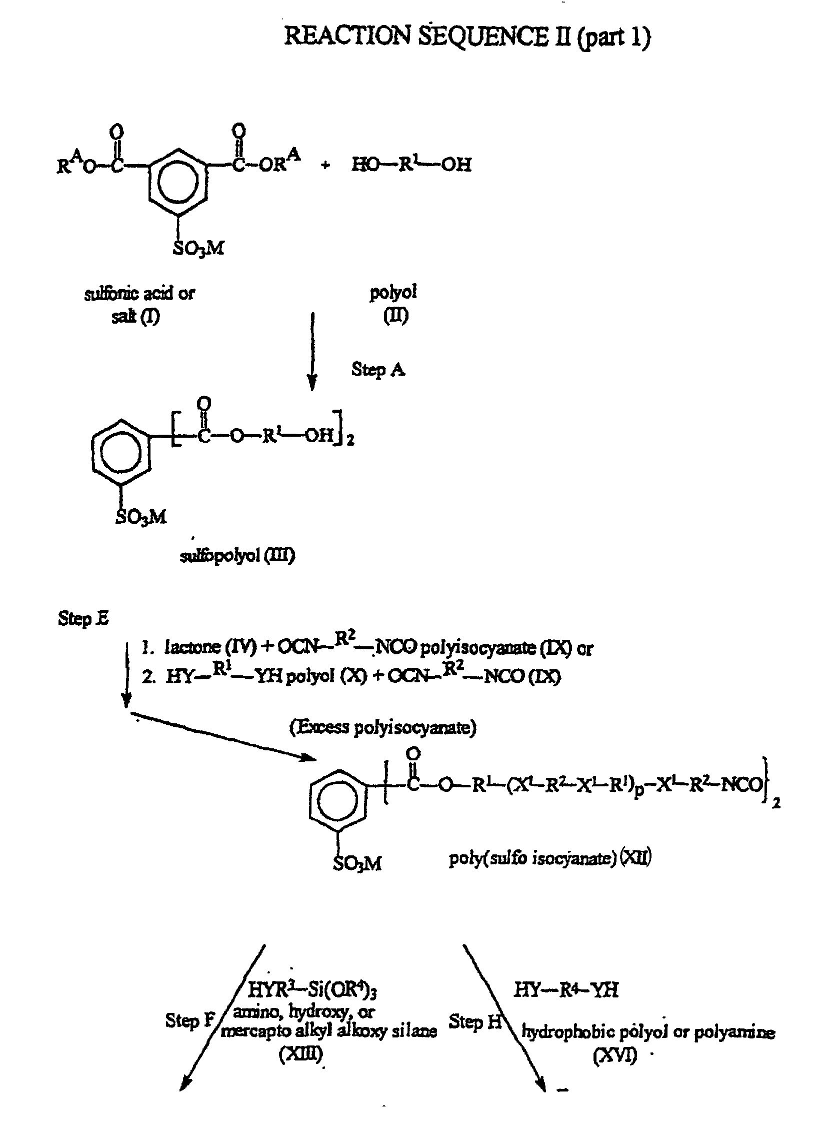 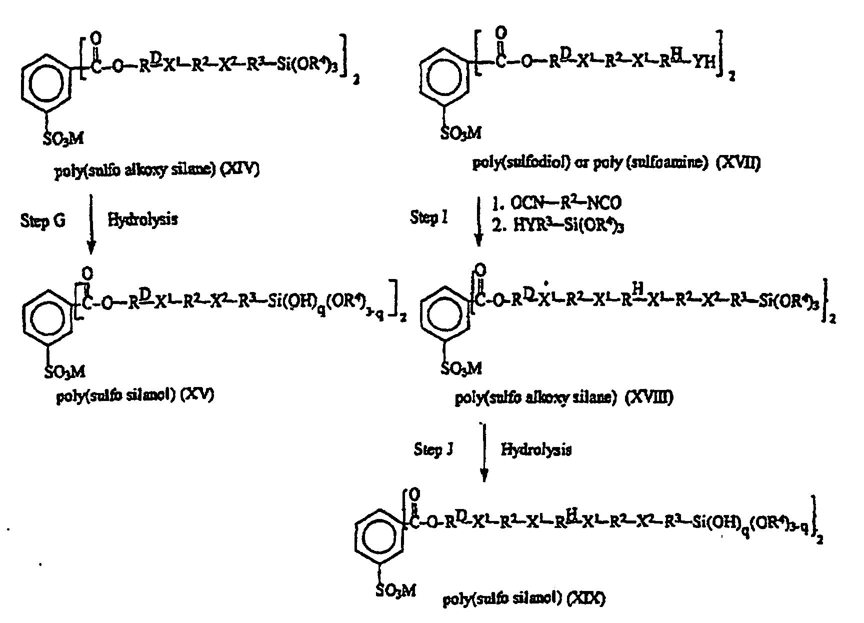 wherein Y = -O- or -S-, or NR^{A}; wherein R^{A} is as previously defined;

R^{D} = -R¹(̵X¹-R¹)̵ or -R¹-(X¹-R²-X¹-R¹)̵ₚ;

and R¹, R², R³, R⁴, R^{H}, X¹, X², and M are as previously defined, p is a number in the range of 1 to 50;
and q is a number 1 to 3.

The sulfopoly(ester-urethane)s of the invention and their corresponding hydrolyzed silanols can be prepared by a process comprising the steps (see Reaction Sequence, steps A, B, C, and D) of:
(a) (Step A) reacting a sulfonic acid or salt of formula (I) with a polyol to provide a sulfopolyol of formula (III);
(b) (Step B) reacting the sulfopolyol with a lactone (IV) to obtain a poly(sulfo diol)(V);
(c) (Step C) reacting, poly(sulfo diol) (V) with an isocyanato alkyl alkoxy silane (VI) in an inert organic solvent (i.e. tetrahydrofuran, methyl ethyl ketone; dichloroethane, etc.) to form an poly(sulfo alkoxy silane) (VII); and
(d) (Step D) hydrolyzing the poly(sulfo alkoxy silane) to form a poly(sulfo silanol) (VIII).

In an alternative Reaction Sequence, the poly(sulfosilanol) (VIII) is obtained as indicated in reaction sequence A, B-1, C-1, and D;
- (a)(Step B-1): the sulfodiol (III) can be reacted with polyisocyanate (IX) and an excess of polyol (X) or lactone (IV) to form a poly(sulfodiol) (XI).
- (b)(Step C-1): poly(surfodiol) (XI) can be then reacted with isocyanato alkyl alkoxy silane (VI)to obtain poly(sulfo alkoxy silane) (VII); and,
- (c) Step D: hydrolyzing poly(sulfo alkoxy silane) (VII) to obtain poly(sulfo silanol) (VIII).

In yet another alternative, the poly(sulfo silanol) (XV) can be obtained according to the reaction sequence A, E, F, and G. In this sequence, The poly(sulfo isocyanate) (XII) can be obtained from the reaction of sulfopolyol (III) with polyol (X) or lactone (IV) and a excess of polyisocyanate (IX) as shown in Step E. Poly(sulfoisocyanate) (XII) can subsequently be reacted with hydroxyalkyl alkoxy silane (XIII) or aminoalkyl alkoxy silane or mercaptoalkyl alkoxy silane to obtain poly(sulfo alkoxy silane) (XIV) and the hydrolyzed poly(sulfo silanol) (XV) according to steps F and G.

In a fourth alternative, polysulfo silanol (XIX) can be obtained according to reaction sequence A,E, H, I, J. In this alternative, poly(sulfo isocyanate) (XII) can be reacted with hydrophobic polyol (XVI) to obtain poly(sulfo polyol) (XVII), which is, in turn, converted to poly(sulfo alkoxy silane) (XVIII) and poly(sulfo silanol) (XIX).

Sulfoaryl-dicarboxylic acids useful for preparation of sulfopolyol (III) and subsequent derivatives are any of the known sulfoaryl-dicarboxylic acids. Examples of these include sulfoarenedicarboxylic acids such as 5-sulfoisophthalic acid, 5-sulfonaphthalene-1,4-dicarboxylic acid, 4,5-disulfonaphthalene-1,8-'dicarboxylic acid, and sulfofluorenedicarboxylic acids such as 9,9-di(2'-carboxyethyl)fluorene-2-sulfonic acid described in British Patent No. 1,006,579. It is understood that the corresponding lower alkyl esters, halides, anhydrides, and salts of the above sulfonic acids of formula (I) can also be used in the preparation.

Diisocyanates of formula (IX) that can be used to react with the sulfodiol of formula (III) to form the poly(sulfo isocyanates) (XI and XII) are any of the well-known diisocyanates. Preferred diisocyanates are hexamethylene diisocyanate, toluene diisocyanate, isophorone diisocyanate, 4,4'-diisocyanato-dicyclohexylmethane, 3,5,5-trimethyl-1-isocyanato-3-isocyanatomethylcyclohexane, and 4,4'-diphenylmethane diisocyanate (MDI). Other diisocyanates include those described in U.S. Patent Nos. 3,700,643 and 3,600,359, among many others. Mixtures of diisocyanates can also be used such as a mixture of MDI and hexamethylene diisocyanate.

Isocyanate-terminated sulfopolyurethane compounds similar to structure (XII) are described in U.S. Patent Nos. 4,558,149, 4,746,717, and 4,855,384. They are preferably prepared by the reaction of a sulfoarene or sulfoalkane dicarboxylic acid (or their esters), with two equivalents or more of polyols forming a mixture of sulfo-organic polyol and, in some cases, unreacted polyol. A range of 1.2 to 8 equivalents of polyol can be useful with three to five equivalents being preferred. The sulfo-organic polyol or its mixture with excess polyol is then reacted with excess organic diisocyanate (up to about 15 mole % excess).

Aliphatic or aromatic esterified sulfopolyols of formula (III) useful in preparing the isocyanate-terminated sulfopolyurethane compounds include ethylene glycol, propylene glycol, butylene glycol, hexamethylene glycol, cyclohexamethylenediol, branched chain diols such as neopentyl glycol and 1,4-(2,2,3,3-tetramethyl)butane diol, and the like. Examples of polymeric diols include the polyoxyalkylene diols, the polyester diols of organic dicarboxylic acids and diols, and the polylactone diols having a molecular weight of 62 to about 10,000. Examples of polymeric diols include polyoxyethylene diols such as the Carbowax™ diols available from Union Carbide, Danbury, CT, the polyoxytetramethylenediols such as Polymeg™ diols available from Quaker Oats Company, Chicago, IL, the polyester diols such as the Multron™ poly(ethyleneadipate)diols available from Mobay Chemical Company, and the polycaprolactone diols such as the PCP™ diols available from Union Carbide.

Examples of polymeric aromatic polyols include the polyester diols that are prepared from aromatic dicarboxylic acids such as o-, m-, and p-phthalic acid and diols such as diethylene glycol, triethylene glycol, or glycol.

Preferred polyols are the esterified products of an aliphatic diol, such as butylene glycol and neopentyl glycol, and a lactone, preferably caprolactone,

The hydrophobic compounds of formula (XVI) can comprise polysiloxane groups, pendant higher alkyl groups, or fluorochemical groups as defined above. Examples of useful polysiloxanes include amino organic group-terminated polysiloxanes of the formula 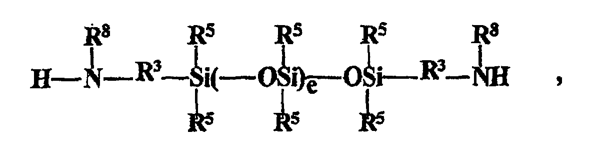 wherein R³ and R⁵ are as previously defined, and R⁸ is H-, CH₃-, C₂H₅-, or other lower alkyl groups. These are known compounds which can be prepared by the procedures disclosed in U.S. Patent Nos. 4,098,742 and 5,091,483.

Organopolysiloxane diamines useful in preparing the hydrophobic compounds of formula (XVI) which can be a precursor of the poly(ester-urethane-urea) compositions of this invention are those for which e is an integer of 10 to 300, preferably 10 to 100, wherein R³, R⁵, and R⁶ are as previously defined.

Hydroxyorganic group-functional polysiloxanes useful in preparing compounds of formula (XVI) are also known compounds and are described in U.S. Patent Nos. 4,098,742, 4,898,918, and 5,128,408.

The hydrophobic compounds of formula (XVI) can also comprise amino organic group-terminated divalent organic groups having the structure 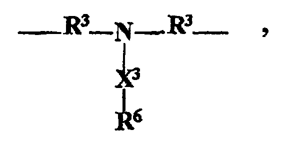 each having an alkyl pendant group, wherein R³, R⁶, and X³ are as defined above. These are known compounds which can be prepared by the reaction of a blocked di(hydroxyalkyl)amine with a mono(higher alkyl) isocyanate wherein R³ is as previously defined.

Alternatively, hydrophobic compounds of formula (XVI) can be prepared from divalent organic groups having one of the structures below or quaternary salts thereof: 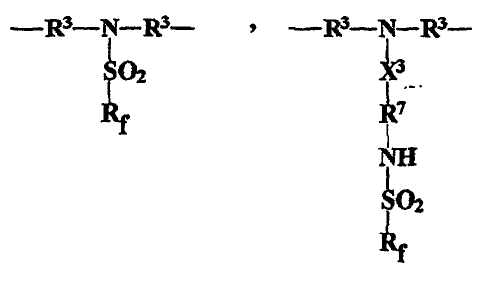 each comprising a fluorocarbon pendant group which can be prepared by the reaction of a perfluoroalkyl sulfonamide with ethylene chlorohydrin, wherein R³, R⁷ and X³ are as defined above. R_{f} is a saturated monovalent fluoroaliphatic group having at least four fully-fluorinated carbon atoms. R_{f} can be straight, branched or, if sufficiently large, cyclic fluoroaliphatic group or combinations thereof, such as alkylcycloaliphatic radicals. The skeletal chain in the fluoroaliphatic radical can include catenary oxygen, hexavalent sulfur, and/or trivalent nitrogen atoms bonded only to carbon atoms of the skeletal chain, such hetero atoms providing stable linkages between fluorocarbon portions of the R_{f} radical. A fully fluorinated radical is preferred, but hydrogen and chlorine atoms may be present as substituents provided that not more than one atom of each is present for every two carbon atoms. While R_{f} can contain a large number of carbon atoms, compounds where R_{f} is not more than 20 carbon atoms will be adequate and preferred since larger radicals usually represent a less efficient utilization of the fluorine than is possible with shorter chains. Fluoroaliphatic radicals containing from 6 to 12 carbon atoms are most preferred. Generally R_{f} will contain 40 to 78 weight percent fluorine. The terminal portion of the R_{f} group preferably has at least four fully fluorinated carbon atoms, e.g. CF₃CF₂CF₂CF₂-, and the preferred compounds are those in which the R_{f} group is fully or substantially completely fluorinated, as in the case where R_{f} is perfluoroalkyl, e.g. CF₃(CF₂)ₘ-, wherein m can be an integer of 1 to 19. Suitable R_{f} groups include, for example, C₈F₁₇-, C₆F₁₃-CH₂CH₂-, and C₁₀F₂₁-CH₂CH₂-.

In particular, Step A of the process for the preparation of polyurethane polymeric composition of the invention can be performed by the reaction of one or more sulfoalkane or sulfoarene dicarboxylic acids with an excess of 0.2 equivalents or more of polyol(s), this amount being in a range from 1.2 to 8 equivalents of polyol(s), preferably 3 to 5 equivalents, i.e., an amount that will provide to the sulfo-organic segment at least one sulfo group per about 800 to 10,000, preferably 1,200 to 2,000, of molecular weight. The sulfopolyol and excess polyol can then be reacted with excess polyisocyanate to form a isocyanate-terminated sulfopolyurethane, the amount of polyisocyanate being up to 15 mole % excess, preferably 1.2 - 10 mole % excess. The concentrations ofthe reactants in the solvent are adjusted so that the final reaction mixture has about 20 to 60 percent solids.

Also, in particular, Step H is performed by reacting up to one molar equivalent of amino- or hydroxy-group-functional hydrophobic compound relative to the isocyanate equivalent of the poly(sulfoisocyanate) (XII) formed by Step E. The reaction sequences are typically carried out in an inert solvent at a solids concentration of about 15 to 80%, preferably 25 to 60% in an inert water miscible solvent.

In another embodiment of the invention, the sulfopoly(ester-urethane)s can comprise alkylene sulfonic acid units in the polymer backbone. Such sulfopoly(ester-urethane)s typically are prepared using methods different from those described for the preparation ofsulfopoly(ester-urethane)s comprising aromatic sulfonic acid units described above due to the lower thermal stability of hydroxy terminated dicarboxylic esters of alkyl sulfonic acids. Preferably, they can be prepared; however, by an alternative route involving the Michael addition of a bisulfite salt to an oligomer of an olefinic unsaturated dicarboxylic acid ester. These oligomers can be prepared from esters of olefinic unsaturated dicarboxylic acids using procedures similar to those described above. Subsequent Michael addition of a bisulfite salt to the olefinic unsaturation in the presence of a free radical initiator will produce an oligomer comprising the salt of alkyl sulfonic acid units in the oligomer backbone.

Olefinic dicarboxylic acids suitable for preparing sulfopoly(ester-urethane)s of the present invention include, but are not limited to, maleic acid, fumaric acid, itaconic acid, and unsaturated diol polyfunctional fatty acids (i.e., castor oil, etc.) or triglycerides of ricinoleic acid.

Release coatings of the present invention can be applied as dispersions or solutions to substrates such as, for example, poly(ethylene terephthalate), cellulosic films, polycarbonate, metals, ceramics, glass, synthetic and natural fibers, etc., to prevent the adherence of various materials and to be used as release coatings for adhesive roll and sheet materials, e.g., adhesive tapes.

Objects and advantages of this invention are further illustrated by the following examples, but the particular materials and amounts thereof recited in these examples, as well as other conditions and details, should not be construed to unduly limit this invention.

The following reaction sequence and typical experimental procedures will serve to clarify the synthesis of the silyl terminated poly(ester-urethane) compositions of the instant invention. "Me" means methyl and "Bu" means butyl. Preparation of the sulfonated diol PCPSSIP shown below is described in greater detail in U.S. Patent No. 4,558,149.

### Preparation of PCPSSIP Precursor

A mixture of dimethyl 5-sodiosulfoisophthalate (DMSSIP, 25.1 kg, 85 mol, available from E.I. DuPont de Nemours, Wilmington, DE), polycaprolactonediol (PCP 0200, average molecular weight 514, 131 kg, 255 mol, available from Union Carbide Corp., Danbury, CT), and tetrabutyl titanate (78 g, 0.23 mol, available from Aldrich Chemical Co., Milwaukee, WI) was heated at 230°C for four hours and the methanol by-product of the reaction was distilled from the reaction. After cooling to ambient temperature, an oily product comprising an approximately equal molar mixture of PCPSSIP and unreacted PCP 0200 was obtained. Reaction Sequence III shows the chemical equations involved

The mixed PCPSSIP Precursor had a nominal hydroxy equivalent weight of about 500 g/mole (generally in the range of 450 to 600 g/mole). The hydroxy equivalent weight for the mixed precursor can vary depending on reaction conditions (e.g., temperature, rate of methanol removal, catalyst, etc.).

In the following examples, "PCPSSIP precursor" means the mixture of PCPSSIP and PCP 0200. Unless otherwise noted, the molar ratio of PCPSSIP to PCP 0200 is approximately 1.0. In Example 2, the PCPSSIP precursor was prepared using zinc acetate (0.24 wt% based on diol charge) instead of tetrabutyl titanate.

In all structures in this application, including those shown for PCP 0200 and PCPSSIP, the numbers outside the brackets refer to the average number of units.

### Example 1

The mixed PCPSSIP precursor prepared as described above except as a 1 to 0.87 molar mixture of PCPSSIP and PCP 0200 (649.8 g, 0.64 mol based on a hydroxyl equivalent weight of 509 for the mixture), additional PCP 0200 (599.4 g, 1.16 mol), ethylene glycol (89.4 g, 1 44 mol, available from J T. Baker, Inc., Phillipsburg, NJ), and methyl ethyl ketone (1338 mL) was heated to 85°C and dried by distilling methyl ethyl ketone (445 mL) from the mixture After cooling to ambient temperature, dibutyltin dilaurate (1.53 g, 2.4 mmol, available from Alfa Chemical Co., Ward Hill, MA) was added to the dried solution. The dried solution was added, with stirring, to a solution of isophorone diisocyanate (800.2 g, 3.60 mol, available from Huls America, Inc. Piscataway, NJ) in methyl ethyl ketone (533 mL), which had been heated to 72°C, at such a rate that the temperature of the reaction mixture did not exceed 85°C. After 1 hour, additional dibutyltin dilaurate (1.53 g) in methyl ethyl ketone (50 mL) was added to the solution, and the reaction mixture was maintained at 80°C, with stirring, for an additional 3.5 hours. A solution of 3-aminopropyltriethoxysilane (159.4 g, 0.72 mol, available from Aldrich Chemical Co.) in methyl ethyl ketone (100 mL) was then added to the reaction mixture which was maintained at 80°C, with stirring, for an additional 45 minutes. Water (2 L), at 80°C, was added to the reaction mixture over about a one-hour period with vigorous stirring and methyl ethyl ketone was subsequently distilled from the mixture under reduced pressure to produce a dispersion (54% solids) of a silanol terminated poly(ester-urethane) in water. Modulated Differential Scanning Calorimetry (MDSC) and tensile properties analyses made of a spun cast film of the dispersion indicated that the polymer had a Tg of 26°C and a tensile strength of 17.9 MPa (2595 psi) at 587% elongation.

### Example 2

A silanol terminated sulfopoly(ester-urethane) was prepared substantially according to the procedure of Example 1 except that the reactants were charged as follows:
The mixed PCPSSIP precursor (37.6 g, 0 04 mol), PCP 0201 (52 4 g, 0.10 mol) (polycaprolactam diol, available from Union Carbide), ethylene glycol (7.44 g, 0.12 mol), and isophorone diisocyanate (62.2 g, 0.28 mol). The molar ratio ofthe reactants was 1:6:6:14. Modulated Differential Scanning Calorimetry (MDSC) and tensile properties analyses made of a spun cast film of the polymer produced by this reaction sequence indicated that the polymer had a Tg of 17°C and a tensile strength of 30.6 MPa at 653% elongation.

In Examples 3-5, below, the isocyanate utilized was bis(4-isocyanatohexyl)methane.

### Example 3

A silanol terminated sulfopoly(ester-urethane) was prepared substantially according to the procedure of Example I except that the reactants were charged as follows:
The mixed PCPSSIP precursor (53.3 g, 0.06 mol), PCP 0201 (47.7 g, 0.09 mol), ethylene glycol (3.7 g, 0.06 mol) and bis(4-isocyanatocyclohexyl)methane (62.9 g, 0.24 mol, H₁₂MDI, available from Bayer Corp., Pittsburgh, PA). The molar ratio of the reactants was 1:4:2:8. Modulated Differential Scanning Calorimetry (MDSC) and tensile properties analyses made of a spun cast film of the polymer produced by this reaction sequence indicated that the polymer had a Tg of 14°C and a tensile strength of 14.7 MPa at 502% elongation.

### Example 4

A silanol terminated sulfopoly(ester-urethane) was prepared substantially according to the procedure of Example 1 except that the reactants were charged as follows:
The mixed PCPSSIP precursor (56.9 g, 0.06 mol), PCP 0201 (63.6, 0.12 mol), ethylene glycol (9.3 g, 0.15 mol) and bis(4-isocyanatocyclohexyl)methane (94.3 g, 0.36 mol). The molar ratio of the reactants was 1.5:5.12. Modulated Differential Scanning Calorimetry (MDSC) and tensile properties analyses made of a spun cast film of the polymer produced by this reaction sequence indicated that the polymer had a Tg of 36°C and a tensile strength of 17.4 MPa at 390% elongation.

### Example 5

A silanol terminated sulfopoly(ester-urethane) was prepared substantially according to the procedure of Example 1 except that the reactants were charged as follows:
The mixed PCPSSIP precursor (53.3 g, 0.06 mol), PCP 0201 (15.9 g, 0.03 mol), ethylene glycol (7.45 g, 0.12 mol) and bis(4-isocyanatocyclohexyl)methane (62.9 g, 0.24 mol). The molar ratio of the reactants was 1:2:4:8. Modulated Differential Scanning Calorimetry (MDSC) and tensile properties analyses made of a spun cast film of the polymer produced by this reaction sequence indicated that the polymer had a Tg of 80°C and a tensile strength of 18.2 MPa at 111% elongation.

The following example teaches the preparation and reaction of a sulfonated polyester diol other than PCPSSIP

### Example 6

A mixture of DMSSIP (74.0 g, 0.25 mol), 1,4-cyclohexanedimethanol (180 g, 1.25 mol, available from Aldrich Chemical Co.), and tetrabutyl titanate (0.1 g, 0.3 mmol) was heated to 200°C and maintained at that temperature, with stirring, for four hours, and then cooled to 150°C where it was maintained, with stirring, for an additional five hours The temperature of the reaction mixture was then increased to 180°C and ε-caprolactone (228 g, 2.0 mol, available from Aldrich Chemical Co.) containing dibutyltin dilaurate (0.2 g, 0.3 mmol) was added to the reaction mixture, with stirring, over a period of 30 minutes. The mixture was maintained at 180°C, with stirring, for three hours and then cooled to room temperature, to produce an oily precursor composition comprising a 1:3 molar ratio of a sulfonated diol and a diol resulting from the reaction of 1,4-cyclohexanedimethanol (1 part) with ε-caprolactone (2 parts). The thus prepared precursor was converted to a silanol terminated sulfopoly(ester-urethane) substantially according to the procedure of Example 1 by reacting 55.9 g of the precursor with PCP 0201(62.9 g, 0.12 mol), ethylene glycol (5.58 g, 0.09 mol), isophorone diisocyanate (79.9 g, 0.36 mol) followed by reaction with aminopropyltriethoxy silane (11.7 g, 0.053 mol). Modulated Differential Scanning Calorimetry (MDSC) and tensile properties analyses made of a spun cast film of the polymer produced by this reaction sequence indicated that the polymer had a Tg of 29°C and a tensile strength of 28.6 MPa at 341% elongation.

The following Example teaches the practice of the invention by the embodiment of first preparing a hydroxyl terminated poly(ester-urethane), reaction of this hydroxyl terminated poly(ester-urethane) with an electrophilic alkoxy silane reagent, and reaction of the alkoxy silane terminated poly(ester-urethane) with an electrophilic alkoxy silane reagent, and reaction of the alkoxy silane terminated poly(ester-urethane) with water.

### Example 7

A mixture of PCPSSIP precursor (57.33 g, 0 06 mol, with a hydroxy equivalent weight of 475), PCP 0201 (62.76 g, 0.12 mol, available from Union Carbide Corp.), ethylene glycol (9.32 g, 0.15 mol) and dibutyltin dilaurate (0.16 g, 0.25 mmol) in methyl ethyl ketone (85 mL) was heated to 80°C and a solution of isophorone diisocyanate (66.69 g, 0.3 mol) in methyl ethyl ketone (44 mL) added to the mixture, with stirring, at a rate such that the reaction temperature did not exceed 80°C. Approximately 30 minutes subsequent to the completion of the addition of the isophorone diisocyanate solution, dibutyltin dilaurate (0.16 g) in methyl ethyl ketone (1 mL) was added to the reaction mixture and the reaction maintained at 80°C, with stirring, for an additional 3 5 hours. A solution of isocyanatopropyltriethoxy silane (14.82 g, 0.06 mol, available from Huls America, Inc.) in methyl ethyl ketone (5 mL) was added to the reaction mixture and the mixture maintained at 80°C, with stirring, for approximately one hour. (Infrared analysis (2250 cm⁻¹) of the reaction mixture at this point indicated no residual isocyanate remained.) Water (260 mL) was added to the reaction mixture, with stirring, over a period of approximately ten minutes and the methyl ethyl ketone was distilled from the mixture under reduced pressure to produce a dispersion of a silanol terminated sulfopoly(ester-urethane). Modulated Differential Scanning Calorimetry (MDSC) and tensile properties analyses made of a spun cast film of the polymer produced by this reaction sequence indicated that the polymer had a Tg of 7°C and a tensile strength of 17.9 MPa at 295% elongation.

### Example 8

A silyl terminated sulfopoly(ester-urethane) was prepared as follows:
A *bis*-(propylamino) terminated polysiloxane having an average molecular weight of approximately 5,000 was prepared as follows:
   A solution of bis(3-aminopropyl) tetramethyl disiloxane (14.96 g, 0.06 moles, available from Aldrich Chemical Co.) in octamethylcyclotetra-siloxane (352.9 g, available from General Electric Co.) was purged with argon for 20 minutes, followed by heating the solution to 150°C, adding 0.06 g of a 50% solids (w/w) aqueous cesium hydroxide solution and maintaining the resulting reaction mixture of 150°C for an additional 6 hours. The reaction mixture was then cooled to 70°C, neutralized with excess triethyl amine and acetic acid, and heated to 130-160°C under 10 mm Hg vacuum for at least 5 hours to remove cyclic siloxanes. An *bis*-(propylamino) terminated polysiloxane having a theoretical molecular weight of 5,000 was obtained after the reaction mixture was cooled to ambient temperature and filtered to remove cesium acetate.
   An aliquot of the 1:5:5:12 isocyanate terminated sulfopoly(ester-urethane) (44.37 g of a 65.4% solids solution in MEK, 0.01 mol isocyanate) was provided from Example 4, above, and was diluted with MEK (31 g). To this solution was added a mixture of the above described *bis*-(propylamino) terminated polysiloxane (6.25 g, 0.0025 mol amine) and aminopropyl trimethoxysilane (1.66 g, 0.0025 mol amine) in MEK (10.8 g), with stirring. The reaction mixture was stirred at ambient temperature for approximately 10 minutes, after which it was heated to 50°C and water (10 g) was added to the mixture. After approximately one hour at 50°C, additional water (147.6 g) was added to the reaction mixture to produce a dispersion of the hydrolyzed sulfo poly(ester-urethane) in MEK/water. MEK was subsequently distilled from the dispersion to produce an approximately 20% solids dispersion of the hydrolyzed sulfo poly(ester-urethane) in water. A portion of the dispersion was coated on a poly(ethyleneterephthalate) (PET) film and the coating dried at 80°C in a circulation air oven for approximately 5 minutes to produce a clear release coating on the PET film. SCOTCH™ Brand filament tape (#898, available from 3M, St. Paul, MN) or SCOTCH™ Brand masking tape (#232, available from 3M) exhibited substantially no adhesion to the coating while SCOTCH™ Brand Magic Mending Tape (3M) exhibited very low adhesion to the coating. The integrity of the coating, or lack of transfer to the adhesive, was demonstrated by folding the tape test strips over on themselves to produce adhesive/ adhesive contact, and then attempting to separate the thus created bond. In all cases, the strength of the adhesive/adhesive bond was qualitatively judged to be substantially the same as the bond strength of a control sample which had not been applied to the coating.

## Claims

1. A water-dispersible sulfopoly(ester-urethane) having the structural formula 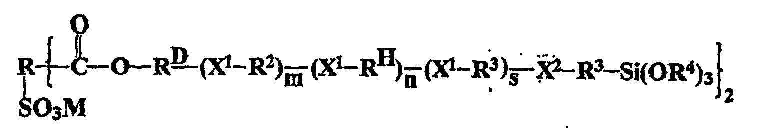 wherein 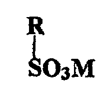 is a unit selected from the group consisting of 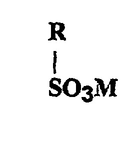 in which R is a C₆-C₁₂ aryltriyl group (trivalent aryl group) and M is a cation, or 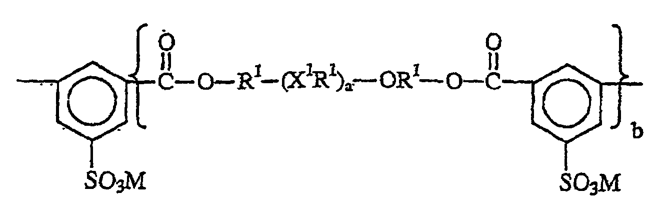 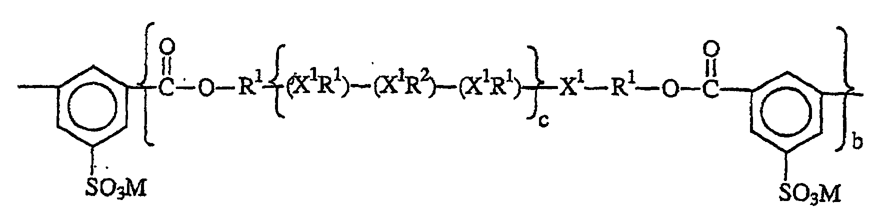 a is 1 to 10,
b is 0 to 4, and
c is 1 to 15,
R^{D} is 1) at least one of a divalent linear or branched organic group of 20 to 150 carbon atoms in units of 2 to 12 methylene groups and arylene groups of 6 to 10 carbon atoms separated by at least one of 1 to 50 catenary oxygen atoms and by 1 to 30 oxycarbonyl groups, 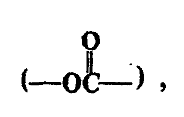 or
R^{D} is 2) an organic group selected from the group consisting of a linear or branched alkylene group having 2 to 12 carbon atoms, a cyclopentamethylene group, a cyclohexamethylene group, a 5- or 6-membered azacyclic group, a phenylene group, a naphthalene group, a phenylenemethylenephenylene group, or
R^{D} is 3) the structure {-R¹-(X¹-R²-X¹-R¹)ₚ-} where p is an integer from 1 to 5, produced by the reaction of a polyol with an isocyanate having the structure OCN-R²-NCO to produce a segment having a molecular weight of from 500 to 4,000,
R¹ is linear or branched alkylene group having 2 to 12 carbon atoms or an arylene group having 6 to 10 carbon atoms;
X¹ is 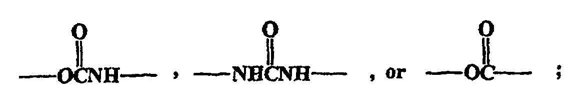
R² is an organic group selected from the group consisting of a linear or branched alkylene group having 2 to 12 carbon atoms, a cyclopentamethylene group, a cyclohexamethylene group, a 5- or 6-membered azacyclic group, a phenylene group, a naphthalene group, a phenylenemethylenephenylene group,
s = 0 or 1,
n = 0 or 1,
m = 0 or 1, with the proviso that at least one of n or m is 1;
X² is 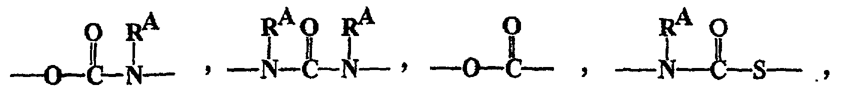 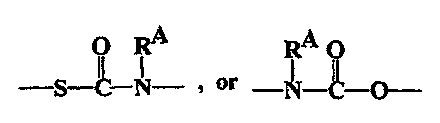 wherein R^{A} can be hydrogen or lower alkyl having 1 to 4 carbon atoms;
R^{H} is a divalent hydrophobic group selected from divalent siloxanes having the structure 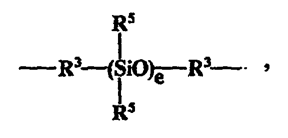 divalent organic groups having the structure 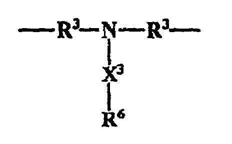 comprising a pendant alkyl group;
or divalent organic groups having one of the structures 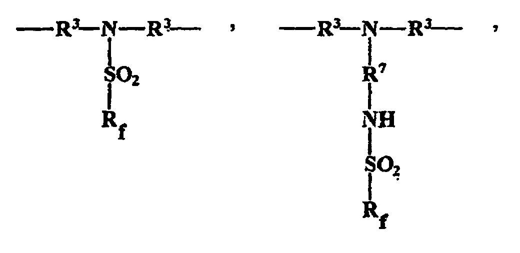 or quaternary salts thereof;
wherein R_{f} is a fluorocarbon pendant group, as defined below;
wherein
R³ is a divalent organic group selected from the group consisting of linear or branched alkylene groups having 2 to 12 carbon atoms, arylene or alkarylene groups, each having 6 to 20 carbon atoms;
R⁴ is a monovalent lower alkyl group having from 1 to 4 carbon atoms;
R⁵ is a monovalent group selected from the group consisting of alkyl groups of one to twelve carbon atoms, aryl groups having 6 to 10 carbon atoms, or aralkyl groups having 6 to 10 carbon atoms, with at least 70% of R⁴ being methyl;
e is an integer of from 10 to 300;
X³ is a covalent bond, a carbonyl group 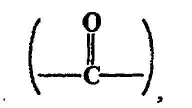 or an amide group 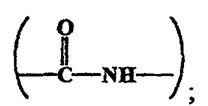
R⁶ is a monovalent group selected from the group consisting of alkyl groups of 4 to 60 carbon atoms,
R⁷ is a divalent group selected from the group consisting of alkylene groups of 2 to 12 carbon atoms; and
R_{f} is a monovalent saturated fluoroaliphatic group having 6 to 12 carbon atoms, at least four of which are fully-fluorinated carbon atoms.

2. The sulfopoly(ester-urethane) according to claim I having a number average molecular weight in the range of 2,000 to less than 50,000 and a sulfonate equivalent weight in the range of 500 to 12,000 g/equivalent.

3. The sulfopoly(ester-urethane) according to claim 1 or 2 wherein M is hydrogen, a metal cation, or a quaternary ammonium cation.

4. The sulfopoly(ester-urethane) according to any of claims 1 to 3 wherein R² is substituted by up to four lower alkyl groups having 1 to 4 carbon atoms and a total of at most 15 carbon atoms.

5. The sulfopoly(ester-urethane) according to any of claims 1 to 4 which has been hydrolyzed to produce a poly(sulfo silanol) having any of the formulae VIII, XV, XIX: 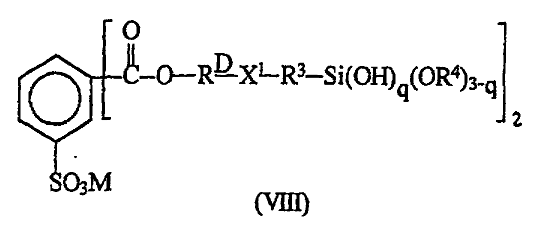 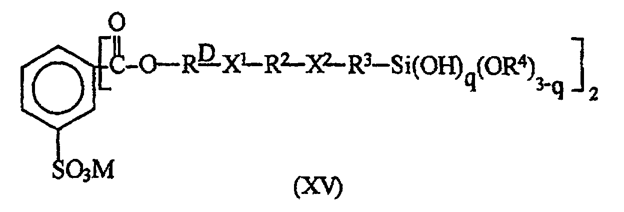 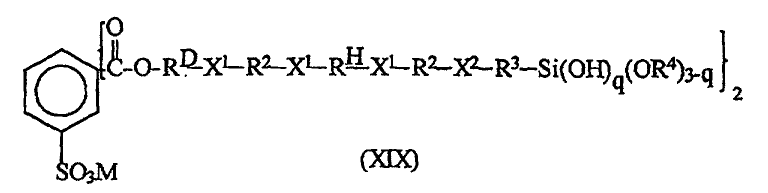 wherein M, R^{D}, X¹, X², R², R³, and R⁴ are as previously defined; and q is a number from 1 to 3.

6. A water dispersible sulfopoly(ester-urethane) composition comprising the sulfopoly(ester-urethane) according to any of claims 1 to 5, said composition optionally further comprising 40 or more weight percent water or aprotic liquid, based on the weight of the total composition, to provide a dispersion of said composition in said liquid.

7. An article comprising a substrate bearing a layer of the sulfopoly(ester-urethane) according to claims 1 to 5 or a layer formed from the composition of claim 6 on at least one surface thereof.

## Patentansprüche

1. Wasserlösliches Sulfopoly(esterurethan) mit der Strukturformel 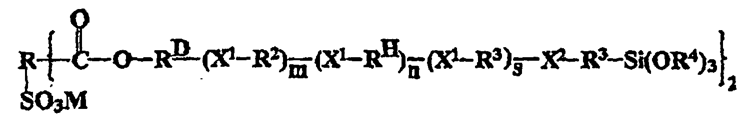 wobei 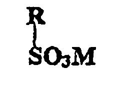 eine Einheit ist, ausgewählt aus der Gruppe 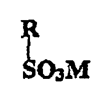 wobei R ein C₆-C₁₂-Aryltriylrest (dreiwertiger Arylrest) ist, und M ein Kation ist oder 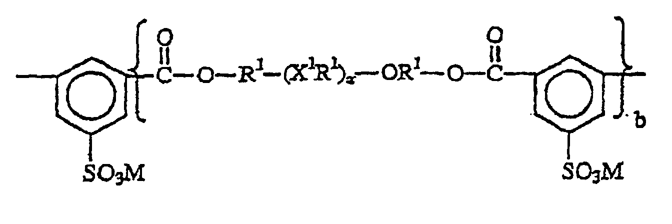 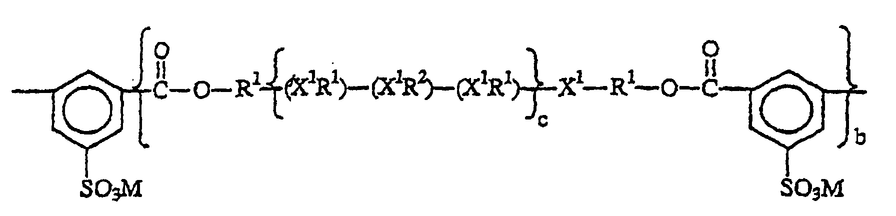 wobei a 1 bis 10 ist,
b 0 bis 4 ist, und
c 1 bis 15 ist,
wobei R^{D} 1) wenigstens einer eines zweiwertigen linearen oder verzweigten organischen Restes von 20 bis 150 Kohlenstoffatomen in Einheiten von 2 bis 12 Methylengruppen und Arylengruppen von 6 bis 10 Kohlenstoffatomen ist, getrennt durch wenigstens eines von 1 bis 50 Sauerstoffatomen in der Kette und durch 1 bis 30 Oxycarbonylgruppen, 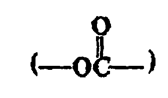 oder
R^{D} 2) ein organischer Rest ist, ausgewählt aus der Gruppe eines linearen oder verzweigten Alkylenrestes mit 2 bis 12 Kohlenstoffatomen, eines Cyclopentamethylenrestes, eines Cyclohexamethylenrestes, eines azacyclischen Restes mit 5- oder 6-Ringatomen, eines Phenylenrestes, eines Naphthalinrestes, eines Phenylenmethylenphenylenrestes, oder
R^{D} 3) die Struktur {-R¹-(X¹-R²-X¹-R¹)ₚ-} ist, wobei p eine ganze Zahl von 1 bis 5 ist, erzeugt durch die Umsetzung eines Polyols mit einem Isocyanat mit der Struktur OCN-R²-NCO, um einen Abschnitt mit einem Molekulargewicht von 500 bis 4.000 zu erzeugen,
R¹ ein linearer oder verzweigter Alkylenrest mit 2 bis 12 Kohlenstoffatomen oder ein Arylenrest mit 6 bis 10 Kohlenstoffatomen ist;
X¹ 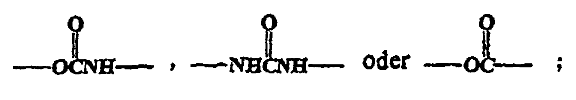 ist;
R² ein organischer Rest ist, ausgewählt aus der Gruppe eines linearen oder verzweigten Alkylenrestes mit 2 bis 12 Kohlenstoffatomen, eines Cyclopentamethylenrestes, eines Cyclohexamethylenrestes, eines azacyclischen Restes mit 5- oder 6-Ringatomen, eines Phenylenrestes, eines Naphthalinrestes, eines Phenylenmethylenphenylenrestes,
s = 0 oder 1,
n = 0 oder 1,
m = 0 oder 1, mit der Maßgabe, daß wenigstens eines von n oder m 1 ist;
X² 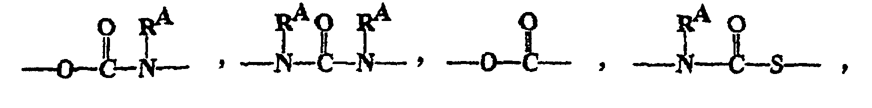 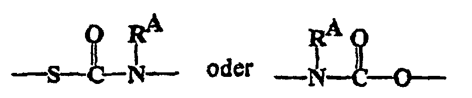 ist,
wobei R^{A} ein Wasserstoffatom oder ein Niederalkylrest mit 1 bis 4 Kohlenstoffatomen sein kann;
R^{H} ein zweiwertiger hydrophober Rest, ausgewählt aus zweiwertigen Siloxanen mit der Struktur 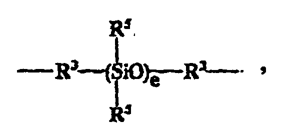 zweiwertigen organischen Resten mit der Struktur 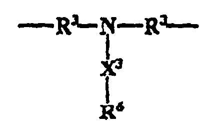 umfassend einen seitenständigen Alkylrest;
oder zweiwertige organische Reste mit einer der Strukturen 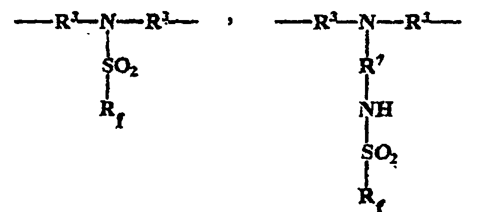 oder quartäre Salze davon ist,
wobei R_{f} ein seitenständiger Fluorkohlenstoffrest ist, wie nachstehend definiert;
wobei
R³ ein zweiwertiger organischer Rest ist, ausgewählt aus der Gruppe von linearen oder verzweigten Alkylenresten mit 2 bis 12 Kohlenstoffatomen, Arylen- oder Alkarylenresten mit jeweils 6 bis 20 Kohlenstoffatomen;
R⁴ ein einwertiger Niederalkylrest mit 1 bis 4 Kohlenstoffatomen ist;
R⁵ ein einwertiger Rest ist, ausgewählt aus der Gruppe von Alkylresten mit einem bis zwölf Kohlenstoffatomen, Arylresten mit 6 bis 10 Kohlenstoffatomen oder Aralkylresten mit 6 bis 10 Kohlenstoffatomen, wobei wenigstens 70% von R⁴ Methyl ist;
e eine ganze Zahl von 10 bis 300 ist;
X³ eine kovalente Bindung, eine Carbonylgruppe 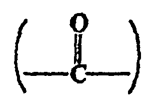 oder eine Amidgruppe 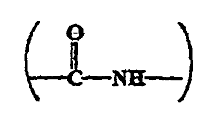 ist;
R⁶ ein einwertiger Rest ist, ausgewählt aus der Gruppe von Alkylresten mit 4 bis 60 Kohlenstoffatomen,
R⁷ ein zweiwertiger Rest ist, ausgewählt aus der Gruppe von Alkylenresten mit 2 bis 12 Kohlenstoffatomen, und
R_{f} ein einwertiger gesättigter fluoraliphatischer Rest mit 6 bis 12 Kohlenstoffatomen ist, von welchen wenigstens vier vollständig fluorierte Kohlenstoffatome sind.

2. Sulfopoly(esterurethan) nach Anspruch 1 mit einem Zahlenmittel des Molekulargewichts im Bereich von 2.000 bis weniger als 50.000 und einem Sulfonatäquivalentgewicht im Bereich von 500 bis 12.000 g/Äquivalent.

3. Sulfopoly(esterurethan) nach Anspruch 1 oder 2, wobei M ein Wasserstoffatom, ein Metallkation oder ein quartäres Ammoniumkation ist.

4. Sulfopoly(esterurethan) nach einem der Ansprüche 1 bis 3, wobei R² durch bis zu vier niederere Alkylreste mit 1 bis 4 Kohlenstoffatomen und einer Gesamtzahl von höchstens 15 Kohlenstoffatomen substituiert ist.

5. Sulfopoly(esterurethan) nach einem der Ansprüche 1 bis 4, welches hydrolysiert worden ist, um ein Poly(sulfosilanol) mit einer der Formeln VIII, XV, XIX zu erzeugen: 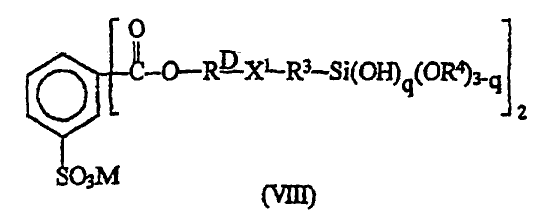 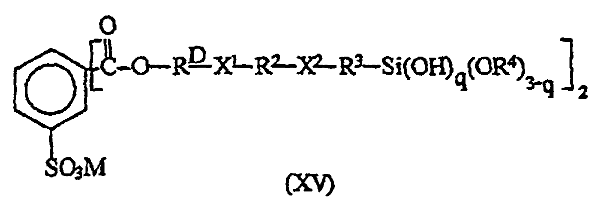 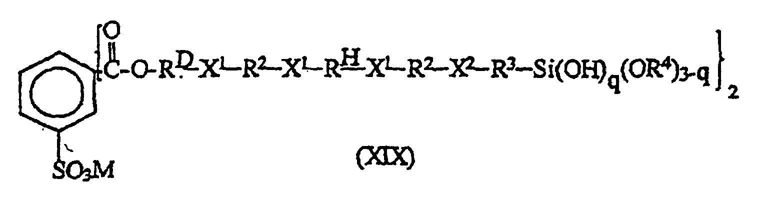 wobei M, R^{D}, X¹, X², R², R³ und R⁴ die vorher definierte Bedeutung haben; und q eine Zahl von 1 bis 3 ist.

6. Wasserdispergierbare Sulfopoly(esterurethan)-Zusammensetzung, umfassend das Sulfopoly(esterurethan) nach einem der Ansprüche 1 bis 5, wobei die Zusammensetzung gegebenenfalls ferner 40 oder mehr Gewichtsprozent Wasser oder einer aprotischen Flüssigkeit, bezogen auf das Gesamtgewicht der Zusammensetzung, umfaßt, um eine Dispersion der Zusammensetzung in der Flüssigkeit bereitzustellen.

7. Gegenstand, umfassend ein Substrat, das eine Schicht des Sulfopoly(esterurethans) nach einem der Ansprüche 1 bis 5 oder eine Schicht, die aus der Zusammensetzung von Anspruch 6 auf wenigstens einer seiner Oberflächen erzeugt wird, trägt.

## Revendications

1. Sulfopoly(ester-uréthane) dispersable dans l'eau ayant la formule développée suivante : 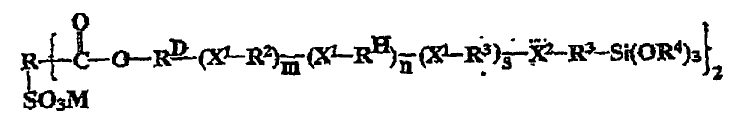 dans laquelle 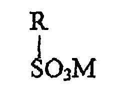 est un motif choisi dans le groupe constitué par 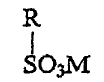 dans lequel R est un groupe acyltriyle en C₆-C₁₂ (groupe aryle
trivalent) et M est un cation, ou 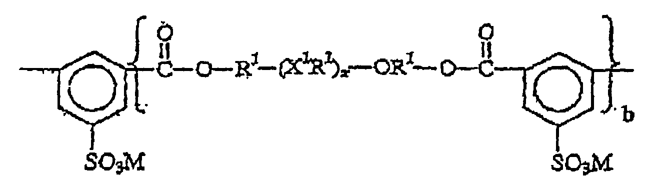 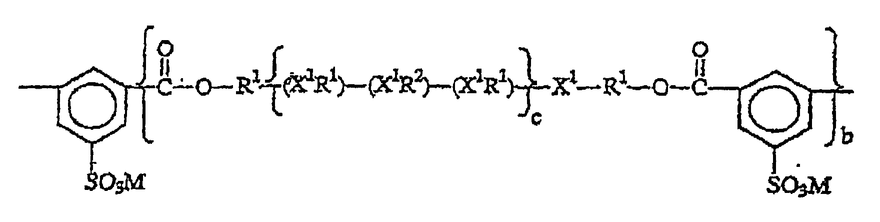 a vaut 1 à 10,
b vaut 0 à 4, et
c vaut 1 à 15,
R^{D} est 1) au moins un groupe organique divalent linéaire ou ramifié de 20 à 150 atomes de carbone dans des motifs de 2 à 12 groupes méthylène et des groupes arylène de 6 à 10 atomes de carbone séparés par au moins un de 1 à 50 atomes d'oxygène dans la chaîne et par 1 à 30 groupes oxycarbonyle, 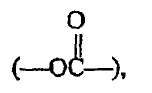 ou
R^{D} est 2) un groupe organique choisi dans l'ensemble constitué par un groupe alkylène linéaire ou ramifié comportant 2 à 12 atomes de carbone, un groupe cyclopentaméthylène, un groupe cyclohexaméthylène, un groupe azacyclique à 5 ou 6 chaînons, un groupe phénylène, un groupe naphtalène, un groupe phénylèneméthylènephénylène, ou
R^{D} est 3) la structure {-R¹-(X¹-R²-X¹-R¹)ₚ-}, dans laquelle p est un nombre entier de 1 à 5, produit par la réaction d'un polyol avec un isocyanate de structure OCN-R²-NCO, pour produire un segment ayant une masse moléculaire de 500 à 4000,
R¹ est un groupe alkylène linéaire ou ramifié comportant 2 à 12 atomes de carbone ou un groupe arylène comportant 6 à 10 atomes de carbone;
X¹ est 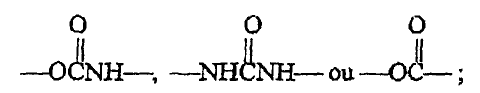
R² est un groupe organique choisi dans l'ensemble constitué par un groupe alkylène linéaire ou ramifié comportant 2 à 12 atomes de carbone, un groupe cyclopentaméthylène, un groupe cyclohexaméthylène, un groupe azacyclique à 5 ou 6 chaînons, un groupe phénylène, un groupe naphtalène, un groupe phénylèneméthylènephénylène,
s = 0 ou 1,
n = 0 ou 1,
m = 0 ou 1, à condition qu'au moins un de n et m soit égal à 1;
X² est 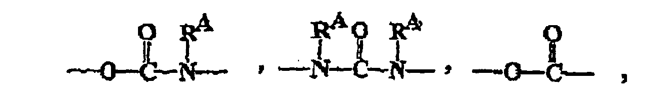 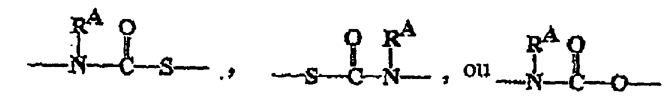 où R^{A} peut être un atome d'hydrogène ou un groupe alkyle inférieur comportant 1 à 4 atomes de carbone;
R^{H} est un groupe hydrophobe divalent choisi parmi:
les siloxanes divalents de structure 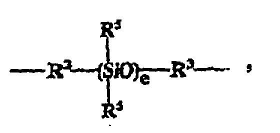
les groupes organiques divalents de structure 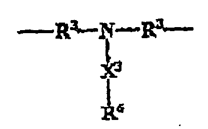
comprenant un groupe alkyle pendant
ou les groupes organiques divalents possédant l'une des structures 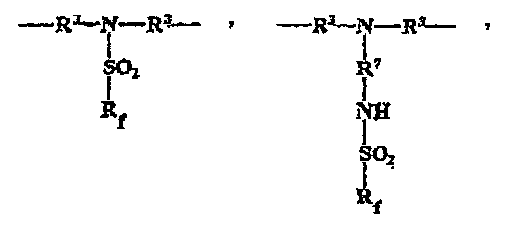 ou leurs sels quaternaires,
où R_{f} est un groupe pendant fluorocarboné, tel que défini ci-dessous;
où
R³ est un groupe organique divalent choisi dans l'ensemble constitué par les groupes alkylène linéaires ou ramifiés comportant 2 à 12 atomes de carbone, les groupes arylène ou alkarylène, chacun comportant 6 à 20 atomes de carbone;
R⁴ est un groupe alkyle inférieur monovalent comportant de 1 à 4 atomes de carbone;
R⁵ est un groupe monovalent choisi dans l'ensemble constitué par les groupes alkyle de 1 à 12 atomes de carbone, les groupes aryle comportant 6 à 10 atomes de carbone; ou les groupes aralkyle comportant 6 à 10 atomes de carbone, au moins 70% des radicaux R⁴ étant des groupes méthyle;
e est un nombre entier de 10 à 300;
X³ est une liaison covalente, un groupe carbonyle 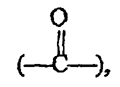 ou un groupe amide 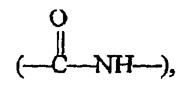
R⁶ est un groupe monovalent choisi dans l'ensemble constitué par les groupes alkyle de 4 à 60 atomes de carbone;
R⁷ est un groupe divalent choisi dans l'ensemble constitué par les groupes alkylène de 2 à 12 atomes de carbone; et
R_{f} est un groupe fluoroaliphatique saturé monovalent comportant 6 à 12 atomes de carbone, dont quatre au moins sont des atomes de carbone entièrement fluorés.

2. Sulfopoly(ester-uréthane) selon la revendication 1, ayant une masse moléculaire moyenne en nombre dans la gamme de 2 000 à moins de 50 000 ct un poids équivalent de sulfonate dans la gamme de 500 à 12 000 g/équivalent.

3. Sulfopoly(ester-uréthane) selon la revendication 1 ou 2, dans lequel M est un atome d'hydrogène, un cation métallique ou un cation ammonium quaternaire.

4. Sulfopoly(ester-uréthane) selon l'une quelconque des revendications 1 à 3, dans lequel R² est substitué par jusqu'à quatre groupes alkyle inférieurs comportant 1 à 4 atomes de carbone et un total d'au plus 15 atomes de carbone.

5. Sulfopoly(ester-uréthane) selon l'une quelconque des revendications 1 à 4, qui a été hydrolysé pour produire un poly(sulfosilanol) répondant à l'une quelconque des formules VIII, XV, XIX: 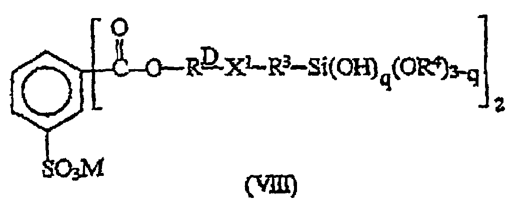 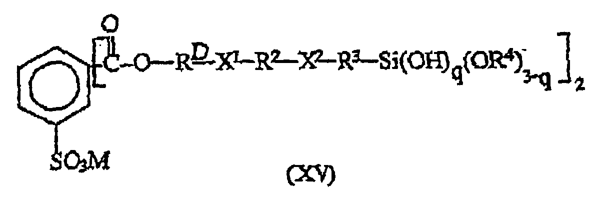 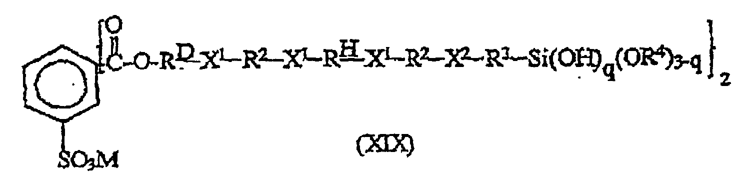 dans lesquelles M, R^{D}, X¹, X², R², R³ et R⁴ sont tels que définis ci-dessus; et q est un nombre de 1 à 3.

6. Composition de sulfopoly(ester-uréthane) dispersable dans l'eau comprenant le sulfopoly(ester-uréthane) selon l'une quelconque des revendications 1 à 5, ladite composition comprenant en outre éventuellement 40 pour cent en poids ou plus d'eau ou d'un liquide aprotique, par rapport au poids de la composition totale, pour fournir une dispersion de ladite composition dans ledit liquide.

7. Article comprenant un substrat portant une couche du sulfopoly(ester-uréthane) selon les revendications 1 à 5 ou une couche formée à partir de la composition de la revendication 6 sur au moins une de ses surfaces.
